# EUROPÄISCHE PATENTSCHRIFT

(11) **EP 2 981 744 B1**
(45) Veröffentlichungstag und Bekanntmachung des Hinweises auf die Patenterteilung: **01.11.2017**
(21) Anmeldenummer: 14700919.5
(22) Anmeldetag: 20.01.2014
(51) Int. Cl.: F16J 9/26

(54) **KOLBENRING MIT VERSCHLEISSANZEIGE**
PISTON RING HAVING WEAR INDICATION
SEGMENT DE PISTON DOTÉ D'UN INDICATEUR D'USURE

(30) Priorität: 04.04.2013 DE 102013205912
(43) Veröffentlichungstag der Anmeldung: 10.02.2016
(73) Patentinhaber: Federal-Mogul Burscheid GmbH, 51399 Burscheid (DE)
(72) Erfinder: NATHEM, Frank, 86415 Mering (DE); SCHMIDT, Peter, 51399 Burscheid (DE)
(74) Vertreter: Becker Kurig Straus
(86) Internationale Anmeldenummer: PCT/EP2014/051022
(87) Internationale Veröffentlichungsnummer: WO 2014/161677

(56) Entgegenhaltungen:
- EP-A1- 1 283 344
- EP-A2- 0 438 360
- GB-A- 1 503 255
- GB-A- 2 124 332
- JP-A- H11 173 275
- JP-A- 2005 194 931

## Beschreibung

Die vorliegende Erfindung betrifft einen Kolbenring mit einer Verschleißanzeige an einer äußeren Gleitfläche des Kolbenrings.

Kolbenringe sind in dem Stand der Technik seit der Herstellung von Verbrennungsmotoren hinlänglich bekannt.

In großen Verbrennungsmotoren wird der Verschleiß von Kolbenringen regelmäßig optisch und evtl. über eine Schichtdickenmessung der Laufflächenbeschichtung überprüft. Eine verlässliche Beurteilung ist jedoch oft aufgrund der engen Platzverhältnisse für den Anwender schwierig. Zudem ersetzen Motorenherstellern immer mehr Standardinspektionsintervalle durch zustandsbezogene Instandhaltungsmaßnahmen. Dadurch wird die Verschleißreserve der Motorbauteile, auch des Kolbenringes, stärker ausgereizt.

Bisher werden Ringe optisch oder per Schichtdickenmessung beurteilt. Eine optische Beurteilung sagt wenig über die noch vorhandene Restschichtdicke der Laufflächenbeschichtung aus. Die Prüfung mit Schichtdickenmessung ist im eingebauten Zustand sehr oft mit großen Messfehlern behaftet.

Wie alle anderen mechanischen Komponenten sind auch Kolbenringe einem Verschleiß unterworfen. Bisher standen jedoch noch keine Möglichkeiten zur Verfügung, den Verschleiß eines Kolbenrings einfach zu bestimmen, ohne den Kolbenring aus der Kolbenringnut eines Kolbens entnehmen zu müssen.

Es ist ebenfalls bekannt, dem Kolbenringverschleiß mit speziellen Verschleißschutzschichten zu begegnen.

Kolbenringe mit Verschleißschutzschichten sind beispielsweise der EP0438360A, der JP2005194931A oder der EP1409896 oder der US5901963 (A) bekannt. Sowohl in der EP1409896 als auch in US5901963 (A) sind die Verschleißschutzschichten so ausgelegt, dass sie für die gesamte geplante Lebensdauer des Kolbenrings ausreichen. Daher sind in diesen Dokumenten keine Verschleißanzeiger vorgesehen, die einen möglichen Verschleiß des Kolbenrings anzeigen können. Der Verschleiß des Kolbenrings kann jedoch in den geplanten Wartungsintervallen überprüft werden.

Es war bislang unmöglich, einen Kolbenringverschleiß zu bestimmen, ohne den Kolben aus dem Zylinder auszubauen. Es ist daher wünschenswert einen Kolbenring zur Verfügung zu haben, der es gestattet, einen Verschleißgrad eines Kolbenrings zu bestimmen, ohne den Kolbenring aus der Kolbenringnut entnehmen zu müssen oder ohne den Kolben überhaupt aus dem Zylinder bzw. dem Motor ausbauen zu müssen.

Diese und weitere Probleme des Strandes der Technik werden durch einen Kolbenring mit den Merkmalen des Anspruchs 1 und ein Verfahren mit den Merkmalen des Anspruchs 16 gelöst, wobei bevorzugte Ausführungsformen in den abhängigen Ansprüchen offenbart sind.

Gemäß eines ersten Aspekts der vorliegenden Erfindung wird ein Kolbenring bereitgestellt, der eine Verschleißanzeige umfasst. Der Kolbenring umfasst eine Außenfläche. Die Außenfläche des Kolbenrings ist mit einer nach außen, um eine bestimmte Höhe h vorstehende Struktur versehen. Auf der Außenfläche ist eine Verschleißschutzschicht aufgebracht, die vorstehende Struktur überdeckt, wobei die Verschleißschutzschicht eine Dicke aufweist, die in dem Bereich der vorstehenden Struktur um die Höhe der vorstehenden Struktur verringert ist. Die Dicke der Verschleißschutzschicht ist größer, aber zumindest gleich der Höhe der vorstehenden Struktur. Es kann zudem eine Innenfläche sowie der übliche Ringstoß vorgesehen sein. Mit zunehmendem Verschleiß der Verschleißschutzschicht nimmt deren Dicke ab, bis die vorstehende Struktur unter der Verschleißschutzschicht sichtbar wird.

Die Erfindung bezieht sich auf beschichtete Ringe, insbesondere, wenn die Lauffläche nach der Beschichtung noch nachbearbeitet wird. Bei der Ringherstellung wird auf das Laufflächenprofil vor der Beschichtung beispielsweise ein Verschleißanzeigekeil am Scheitelpunkt gedreht bzw vorgesehen. Im Motorbetrieb verschleißt die Laufflächenbeschichtung, bis der Verschleißanzeigekeil freigelegt wird. Bei einer Inspektion kann der Anwender das Vorhandensein des Verschleißanzeigekeils leicht erkennen und so auf die Restschichtdicke des Ringes schließen. Das Freilegen des Verschleißanzeigekeils ist für den Motorlauf wesentlich unproblematischer als das vollständige Verschleißen der Laufflächenbeschichtung. Die Erfindung ist überall dort anwendbar, wo regelmäßig ein Ringverschleiß überprüft wird. Die Erfindung kann sich insbesondere auf 2-Takt-Industriemotoren beziehen, da hier die Außenseite von deren Kolbenringen ohne einen Ausbau der Kolben betrachtet werden kann. Sie ist aber ebenfalls bei 4-Taktmotoren oder Kompressoren anwendbar.

In einer beispielhaften Ausführungsform des Kolbenrings umfasst die nach außen um eine bestimmte Höhe vorstehende Struktur ein anderes Material als das Material, aus dem der Kolbenringkörper gefertigt ist. Diese Ausführungsform gestattet es, die vorstehende Struktur einfach durch ein Beschichtungsverfahren aufzubringen, was einfacher sein kann, als die Struktur aus dem Kolbenringkörper herauszuarbeiten.

In einer weiteren beispielhaften Ausführungsform des Kolbenrings umfasst die nach außen um eine bestimmte Höhe h vorstehende Struktur ein Material, dessen mechanische Eigenschaften denen der Verschleißschutzschicht entsprechen. Dadurch kann die Verschleißanzeige in die Verschleißschutzschicht integriert werden, ohne dass negative Effekte zu erwarten sind. Wenn die vorstehende Struktur ähnliche mechanische Materialeigenschaften wie die Verschleißschutzschicht aufweist, und entsprechend gut mit dieser verbunden werden kann, wird die vorstehende Struktur bzw. die Verschleißanzeige wenige Nachteile zeigen.

In einer zusätzlichen beispielhaften Ausführungsform des Kolbenrings weist das Material der vorstehenden Struktur eine andere Farbe auf, als das Material der Verschleißschutzschicht. Dieser Farbkontrast ermöglicht es, besonders einfach festzustellen, ob die vorstehende Struktur bzw. die Verschleißanzeige an der verschlissenen Oberfläche des Kolbenrings zu erkennen ist oder nicht. Es ist daher nicht notwendig, nur einen strukturellen Unterschied zu betrachten. Dies ist unabhängig davon, ob die vorstehende Struktur aus dem gleichen Material gefertigt ist wie der Kolbenringkörper oder ein drittes Material umfasst.

In noch einer beispielhaften Ausführungsform des Kolbenrings ist eine Lauffläche der Verschleißschutzschicht im Wesentlichen glatter ausgeführt als die Höhe h der vorstehenden Struktur. Eine Rautiefe der Lauffläche wie auch einer verschlissenen Lauffläche sollte dabei kleiner sein als die Höhe h der vorstehenden Struktur, da sonst ein Verschleiß nicht deutlich erkennbar ist.

In einer weiteren beispielhaften Ausführungsform des Kolbenrings ist die Höhe h der vorstehenden Struktur kleiner als 1/5, bevorzugt kleiner als 1/8 und weiter bevorzugt kleiner als 1/10 der Dicke D der Verschleißschutzschicht. Bei einer Höhe h der vorstehenden Struktur, die etwa 1/2 der Dicke D entspricht, kann der Verschleißanzeiger dazu verwendet werden, das Fortschreiten des Verschleißes der Schutzschicht zu beobachten. Bei einer Höhe h der vorstehenden Struktur, die etwa 1/5 der Dicke D entspricht, kann der Verschleißanzeiger dazu verwendet werden, frühzeitig einen Verschleiß anzuzeigen, wobei ein weiterer Einsatz des Kolbenrings möglich ist. Dadurch kann frühzeitig ein Ersatz beschafft werden, und der Kolbenring kann beim nächsten Wartungsintervall eingebaut werden. Bei einer Höhe h der vorstehenden Struktur, die etwa 1/8 der Dicke D entspricht, kann der Verschleißanzeiger dazu verwendet werden, frühzeitig einen Verschleiß anzuzeigen, der einen weiteren Einsatz bis zur Beschaffung von Ersatzteilen ermöglicht. Dies ist vor allem bei Zweitaktmotoren sinnvoll, da dort die Kolbenringe ohne einen Ausbau der Kolben durch die Steuerschlitze im Zylinder betrachtet werden können. Bei einer Höhe h der vorstehenden Struktur, die unter etwa 1/10 der Dicke D liegt, kann der Verschleißanzeiger lediglich als Anzeige und Warnung dienen, den Kolbenring sofort auszuwechseln, da ein weiterer Betrieb nicht empfehlenswert ist.

In einer zusätzlichen beispielhaften Ausführungsform des Kolbenrings weist die vorstehende Struktur eine Breite B auf, die zehn Mal, bevorzugt 50 Mal und weiter bevorzugt 70 Mal breiter ist, als die Höhe h der vorstehenden Struktur. Die vorstehende Struktur, bzw. die Verschleißanzeige sollte ohne Probleme erkennbar seien. Damit ist mindestens eine Breite der vorstehenden Struktur von 0,1 mm notwendig. Dies ergibt bei typischen Höhen der vorstehenden Struktur von 0,03mm in etwa die vorstehend genannten Abmessungsverhältnisse.

In noch einer zusätzlichen beispielhaften Ausführungsform des Kolbenrings verjüngt sich die vorstehende Struktur von der Außenfläche nach außen hin. Damit kann erreicht werden, dass der Verschleißanzeiger auch eine Information über den Grad des Verschleißes angibt. Je breiter die vorstehenden Strukturen an der verschlissenen Oberfläche der Verschleißschutzschicht erscheinen, desto geringer ist die verbleibende Restdicke der Verschleißschutzschicht.

In einer weiteren beispielhaften Ausführungsform des Kolbenrings beträgt die Höhe h der vorstehenden Struktur zwischen 0,01mm und 0,1mm. Bevorzugt beträgt die Höhe h der vorstehenden Struktur zwischen 0,02mm und 0,06mm. Weiter bevorzugt beträgt die Höhe h der vorstehenden Struktur zwischen 0,03mm und 0,04mm. Diese Abmessungen hängen von dem jeweiligen Anwendungszweck ab, wobei die größeren Werte eher für Großmotoren passen und die kleineren Werte eher bei kleineren Motoren Anwendung finden können.

In noch einer beispielhaften Ausführungsform des Kolbenrings beträgt die Breite B der vorstehenden Struktur zwischen 0,1mm und 5mm. Bevorzugt beträgt die Breite B der vorstehenden Struktur zwischen 0,5mm und 3mm. Weiter bevorzugt beträgt die Breite B der vorstehenden Struktur zwischen 1mm und 2mm. In einer weiteren beispielhaften Ausführungsform des Kolbenrings beträgt die Breite B der vorstehenden Struktur zwischen 0,04mm und 0,08mm. Eine derart kleine vorstehende Struktur lässt sich nur mit einem entsprechenden optischen Gerät wie einer Lupe oder einem Mikroskop nachweisen. Die Vorteile kleiner vorstehender Strukturen ergeben sich aus dem geringeren Einfluss der Verschleißanzeige gegenüber der Verschleißschutzbeschichtung. Derart dünne vorstehende Strukturen bzw. Verschleißanzeigen sollten mit einer hohen Länge oder mit einem definierten Muster aufgebracht sein, um die Verschleißanzeige besser identifizieren zu können.

In einer noch weiteren beispielhaften Ausführungsform des Kolbenrings beträgt die Dicke D der Verschleißschutzschicht im unverschlissenen Zustand zwischen 0,1mm und 1mm. Bevorzugt beträgt die Dicke D der Verschleißschutzschicht zwischen 0,2mm und 0,6mm. Weiter bevorzugt beträgt die Dicke D der Verschleißschutzschicht zwischen 0,3 und 0,4mm. Weitere Dicken der Verschleißschutzschichten können sich aus speziellen Anwendungen ergeben.

In einer zusätzlichen beispielhaften Ausführungsform des Kolbenrings ist die vorstehende Struktur gestuft. Eine gestufte Struktur ermöglicht es anhand beispielsweise einer Breite der sichtbaren Struktur zu ermitteln, wie weit die Verschleißschutzschicht verschlissen ist.

In noch einer beispielhaften Ausführungsform des Kolbenrings bildet die vorstehende Struktur Morsezeichen oder eine Schrift. Es könnten auch Zahlen und Maßeinheiten für die Anzeige angegeben werden, wie hoch die verbleibende Restdicke der Verschleißschutzschicht ist, indem die jeweiligen Zahlen unterschiedlich hohe Strukturen bilden, wobei die jeweils kleinste freigelegte Zahl die verbleibende Restdicke angibt. Morsezeichen haben zudem den Vorteil dass sie sehr kleine Abmessungen aufweisen. Bei einer vorstehenden Struktur mit kleinen Abmessungen wird die Verschleißschutzschicht auch dann nicht wesentlich beeinträchtigt, auch wenn die vorstehenden Strukturen an der Oberfläche der Verschleißschutzschicht freiliegen. Eine Verschleißschutzschicht mit nur kleinen oder Punktförmigen Unterbrechungen in der Verschleißschutzschicht weniger beeinträchtigen als beispielsweise eine umlaufende Linie.

In einer zusätzlichen beispielhaften Ausführungsform des Kolbenrings ist die Verschleißschutzschicht einseitig oder zweiseitig gekammert und weiter bevorzugt ist die vorstehende Struktur an der Grenze der Kammerung angeordnet. Bei einer einseitig oder zweiseitig gekammerten Verschleißschutzschicht verläuft diese nicht bis zum Rand des Kolbenrings. Bei einer einseitig gekammerten Verschleißschutzschicht verläuft diese von einem Rand des Kolbenrings bis kurz vor einen Rand, der durch das Material des Kolbenringkörpers gebildet wird. Bei einer zweiseitig gekammerten Verschleißschutzschicht wird diese in eine am Kolbenringkörper in Umfangsrichtung verlaufende Nut eingebracht. Nach einem Glätten der Lauffläche endet die Verschleißschutzschicht vor dem oberen bzw. unteren Rand der Lauffläche. Wenn der Rand der Kammerung gestuft ausgeführt ist, kann man anhand der Breite der Kammerung einfach feststellen, wie weit die Verschleißschutzschicht bereits verschlissen ist.

In einer weiteren zusätzlichen Ausführungsform des Kolbenrings weist das Material der vorstehenden Struktur eine andere Farbe auf, als das Material der Verschleißschutzschicht. Dieses Merkmal erleichtert es erheblich, den Grad eines Verschleißes festzustellen. Eine besonders Ausführung gestattet es die vorstehenden Strukturen aus einem ersten Material für Verschleißschutzschichten herzustellen, wobei dann eine zweite Verschleißschutzschicht mit einer anderen Farbe auf die vorstehenden Strukturen aufgebracht wird. Zusammen kann so eine Verschleißschutzschicht mit einer eingebetteten Verschleißanzeige auf einen Kolbenring mit einer glatten Außenfläche aufgebracht werden.

Gemäß einem weiteren Aspekt der vorliegenden Erfindung wird ein Herstellungsverfahren für einen Kolbenring mit einer Verschleißanzeige bereitgestellt. In dem Verfahren wird ein Kolbenringkörper bzw. Kolbenringrohling bereitgestellt, der eine Außenfläche umfasst. In einem nächsten Schritt wird an der Außenfläche des Kolbenringkörpers eine nach außen um eine Höhe h vorstehende Struktur vorgesehen. Die Höhe h wird dabei von einer Außenfläche bis zur höchsten Erhebung der vorstehenden Struktur gemessen. In einem weiteren Schritt wird eine Verschleißschutzschicht auf die Außenfläche aufgebracht, wobei die vorstehende Struktur überdeckt wird. Später wird die Verschleißschutzschicht mindestens in dem Bereich geglättet, in dem die Verschleißschutzschicht die vorstehende Struktur überdeckt. Bei dem fertigen Kobenring weist die Verschleißschutzschicht eine Dicke aufweist, die in dem Bereich der vorstehenden Struktur um die Höhe h der vorstehenden Struktur verringert ist.

Der Kolbenringkörper bzw. Kolbenringrohling umfasst üblicherweise ebenfalls eine obere Ringflanke und eine untere Ringflanke, sowie eine Innenfläche und einen Ringstoß.

Die Außenfläche des Kolbenringkörpers kann durch Ätzen oder Fotoätzen mit der nach außen um eine Höhe h vorstehende Struktur versehen werden. Die Außenfläche des Kolbenringkörpers kann durch Fräsen, Drehen oder Polieren mit der nach außen um eine Höhe h vorstehende Struktur versehen werden. Die Außenfläche des Kolbenringkörpers kann durch Beschichten mit der nach außen um eine Höhe h vorstehende Struktur versehen werden. Die Außenfläche des Kolbenringkörpers kann durch Drahtbonden wie es aus der Halbleitertechnik bekannt ist mit der vorstehende Struktur versehen werden.

Im Folgenden wird die Erfindung zum besseren Verständnis anhand der Zeichnung mit den folgenden Figuren dargestellt.
Figur 1 stellt eine grundlegende Ausführungsform eines erfindungsgemäßen Kolbenrings in einer Schnittansicht dar.
Figuren 2A und 2B zeigen eine Teil-Schnittansicht und ein vergrößertes Detail der Teil-Schnittansicht eines erfindungsgemäßen neuen Kolbenrings.
Figuren 3A und 3B zeigen eine Teil-Schnittansicht und ein vergrößertes Detail der Teil-Schnittansicht eines erfindungsgemäßen verschlissenen Kolbenrings.
Figuren 4A und 4B zeigen schematisch den Aufbau der vorstehenden Strukturen oder die Anordnung der Verschleißanzeige in Detailansichten.

Sowohl in den Figuren als auch in der Beschreibung werden gleiche Bezugzeichen für gleiche oder ähnliche Komponenten oder Elemente verwendet. Obwohl einige Ausführungen maßstabgetreu erscheinen können, stellen alle Figuren die jeweiligen Ausführungsformen lediglich schematisch dar. Die Darstellungen können zur besseren Verdeutlichung teilweise stark verzerrt sein.

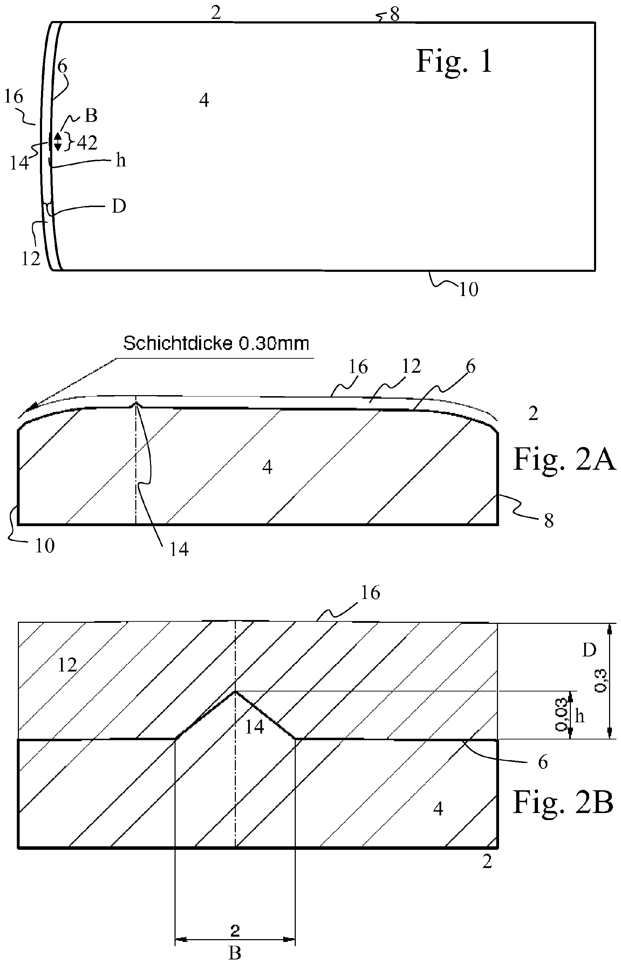

Figur 1 stellt eine grundlegende Ausführungsform eines erfindungsgemäßen Kolbenrings in einer Schnittansicht dar. Der Kolbenring 2 ist mit einer Verschleißanzeige 42 versehen. Der Kolbenring 2 umfasst einen Kolbenringkörper oder Kolbenringrohling 4 mit einer Außenfläche 6, einer oberen Ringflanke 8 und einer unteren Ringflanke 10. Die die Außenfläche 6 des Kolbenringkörpers 4 mit einer nach außen um eine Höhe h vorstehenden Struktur 14 versehen. Die Struktur ist nahezu maßstabgetreu gezeichnet, weshalb die Höhe h, die beispielsweise 0,03mm betragen kann, in der Figur 1 nahezu nicht zu erkennen ist. Die Breite der Verschleißanzeige 42 ist mit B gekennzeichnet, und soll hier 0,1 bis 0,3 mm betragen. Auf der Außenfläche ist 6 eine Verschleißschutzschicht 12 aufgebracht, die die vorstehende Struktur 14 der Verschleißanzeige 42 überdeckt. Die Verschleißschutzschicht 12 weist eine Dicke D von etwa 0,3mm auf, die in dem Bereich der vorstehenden Struktur 14 um die Höhe h der vorstehenden Struktur verringert ist. Bei fortschreitendem Verschleiß der Lauffläche 16 und damit der Verschleißschutzschicht 12 wird nach und nach die vorstehende Struktur 14 zum Vorschein kommen. Sobald die vorstehende Struktur 14 an der Lauffläche 16 sichtbar ist, zeigt dies an, dass die Verbleibende Restdicke der Verschleißschutzschicht maximal der Höhe h entspricht und nicht mehr ausreicht oder sehr bald nicht mehr ausreichen wird, um einen sicheren Betrieb der Kolbenmaschine zu gewährleisten.

Figur 2A ist eine Teil-Schnittansicht des Kolbenrings von Figur 1, wobei lediglich der Teil unter der Lauffläche dargestellt ist. Der Kolbenringkörper 4 liegt, so dass die Lauffläche 16 nach oben weist. Auf dem Außenrand 6 des Kolbenringkörpers 4 ist die Verschleißschutzschicht 12 aufgebracht. Die obere Ringflanke 8 weist nach rechts und die untere Ringflanke 10 ist links dargestellt. Die Außenfläche des Kolbenrings 2 ist mit der vorstehenden Struktur 14 versehen, die in der Mitte der linken Hälfte von Figur 2A zu erkennen ist. Die Verschleißschutzschicht 12 verläuft glatt über die vorstehende Struktur 14 ohne deren Verlauf zu folgen, dadurch wiest die Verschleißschutzschicht 12 im Bereich der vorstehenden Struktur 14 eine verringerte Dicke auf.

Figur 2B stellt ein vergrößertes Detail der Teil-Schnittansicht von Figur 2A dar. In Figur 2B sind insbesondere die Abmessungen h, D und B dargestellt. Um die tatsächlichen Höhenabmessungen zu verdeutlichen, ist die Höhe h der vorstehenden Struktur 14 mit 0,03 mm angegeben. Die Dicke D der Verschleißschutzschicht 12 ist mit 0,30mm angegeben. Die Breite der Struktur 14 kann zwischen 0,1 bis 0,60mm betragen. Die Breite der Struktur 14 kann ebenfalls zwischen 0,01 bis 0,06mm betragen, wobei dann eine Diagnose eines Ringverschleißes nur mit einem Mikroskop möglich ist. Eine geringe Breite der Struktur 14 zwischen 0,01 bis 0,06mm wirkt sich weniger stark auf die Stabilität der Verschleißschutzschicht 12 aus. In Figur 2B ist zu erkennen, dass die Verschleißschutzschicht 12 glatt über die vorstehende Struktur 14 verläuft. Die Verschleißschutzschicht 12 weist im Bereich der vorstehenden Struktur 14 eine verringerte Dicke auf. Wie an den Abmessungen zu erkennen ist, ist die Darstellung schematisch und nicht maßstabgetreu.

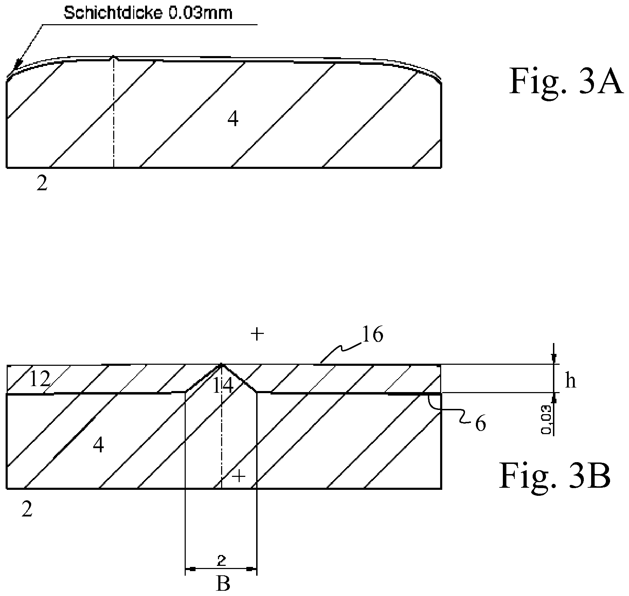

Figur 3A ist eine Teil-Schnittansicht des eines verschlissenen Kolbenrings von Figur 2A. Die Lauffläche 16 ist soweit abgetragen, dass die Spitze der vorstehenden Struktur 14 die Lauffläche 16 berührt. Die Dicke D der Lauffläche entspricht der Höhe h der vorstehenden Struktur 14.

Figur 3B stellt ein vergrößertes Detail der Teil-Schnittansicht von Figur 3A dar. In Figur 3B sind insbesondere die Abmessungen h und B dargestellt. Um die tatsächlichen Höhenabmessungen zu verdeutlichen, ist die Höhe h der vorstehenden Struktur 14 mit 0,03 mm angegeben. Die Dicke der Verschleißschutzschicht 12 entspricht der Höhe 4 und beträgt damit ebenfalls 0,03mm. In Figur 3B ist zu erkennen, dass die Verschleißschutzschicht 12 glatt bis zur vorstehenden Struktur 14 abgetragen ist. Die vorstehende Struktur 14 ist hier als umlaufender Ring ausgeführt, der in den Kolbenringkörper 4 eingedreht ist. Somit erscheint die vorstehende Struktur 14 als durchgehende Line auf der verschlissenen Lauffläche 16. Auch hier ist die Darstellung schematisch und nicht maßstabgetreu.

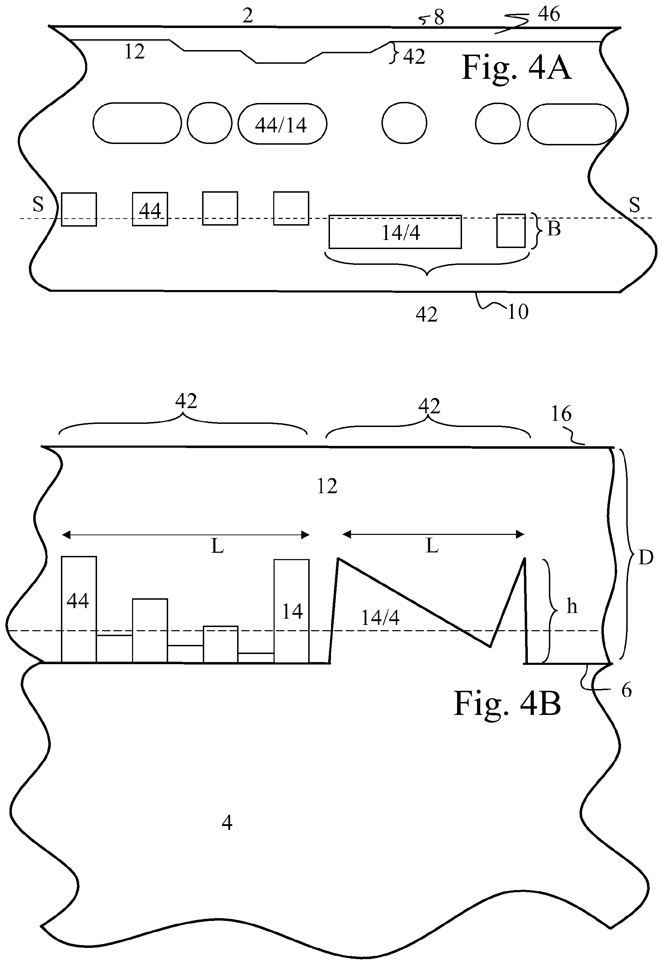

Figuren 4A und 4B zeigen schematisch den Aufbau der vorstehenden Strukturen oder die Anordnung der Verschleißanzeige in Detailansichten.

In Figur 4A ist eine Teil-Aufsicht auf eine verschlissene Lauffläche eines erfindungsgemäßen Kolbenrings 2 mit mehreren Verschleißanzeigen 42. Die Verschleißschutzschicht 12 ist an der Kante zur oberen Ringflanke gekammert. Die Kammerung 46 stellt einen Ring aus Kolbenringmaterial dar, an den die Verschleißschutzschicht angrenzend aufgebracht wurde. Die Kammerung 46 ist hier mit Stufen oder Absätzen versehen, die bei unverschlissener Verschleißschutzschicht 12 abgedeckt sind. Durch den Verschleiß ist die Verschleißschutzschicht 12 jedoch soweit abgetragen, dass die Stufen an der Kammerung 46 als Verschleißanzeige 42 sichtbar sind.

Unter der oberen Kammerung 46 ist durch die verschlissene Verschleißschutzschicht 12 eine vorstehende Struktur 14 in Form von Morsezeichen sichtbar. Mit Morsezeichen kann recht einfach die Restdicke bzw. die Höhe 4 Codieren, sodass ein Betrachter ohne Weiteres eine verbleibende Restdicke feststellen kann. Ein weiterer Vorteil von Morsezeichen besteht darin, dass die Morsezeichen die Verschleißschutzschicht 12 nicht durchgehend unterbrechen, sondern lediglich kurze Unterbrechungen der Verschleißschutzschicht 12 darstellen. Es ist daher davon auszugehen, dass die Funktion der Verschleißschutzschicht 12 auch bei verschlissener Verschleißschutzschicht 12 nicht wesentlich gestört wird. Die Morsezeichen können Wörter wie "Replace" oder "Ersetzen" bzw. "Verschleißgrenze erreicht" codieren.

Die Struktur 44 in Figur 4A stellt eine gestufte vorstehende Struktur 14 dar, bei der vier Stufen zu erkennen sind. Eine entsprechende Struktur wird in Bezug auf Figur 4B näher beschrieben. Der mit 14/4 gekennzeichnete Verschleißanzeiger 42 verwendet eine Balkendarstellung, um eine verbleibende Restdicke der Verschleißschutzschicht 12 grafisch darzustellen. Auch hier wird eine entsprechende Struktur in Bezug auf Figur 4B näher beschrieben. In Bezug auf die Strukturen 44 und 14/4 wird auf Figur 4B hingewiesen, bei der diese Strukturen so dargestellt sind, als wäre die Verschleißschutzschicht 12 von Figur 4B bis zur gestrichelten Linie abgetragen.

Figur 4B zeigen schematisch den Aufbau der vorstehenden Strukturen in einer Detail-Schnittansicht der Figur 4A entlang der Linie S-S.

Der Kolbenring 2, der Kolbenringkörper 4 mit seiner Außenfläche 6 sowie der Verschleißschutzschicht 12 mit der Lauffläche 16 sind bereits aus den anderen Figuren bekannt.

Die Struktur 44 in Figur 4B stellt eine gestufte vorstehende Struktur 14 dar, die ein anderes Material als der Kolbenringkörper 4 oder die Verschleißschutzschicht 12 umfasst. Die Struktur 14 aus dem Material 44 kann durch verschiedene Verfahren aufgebracht werden. Die Struktur 14 aus dem Material 44 ist aus rechteckigen oder quadratischen Säulen zusammengesetzt, die eine Höhenabstufung aufweisen. Somit kann der Fachmann aus der Anzahl und Anordnung der an der Oberfläche Lauffläche 16 in Erscheinung tretenden Strukturen eine mögliche Restdicke der Verschleißschutzschicht 12 erkennen. Bei der Hälfte der Dicke D der Verschleißschutzschicht 12 erscheinen zunächst zwei Quadrate. Bei fortschreitendem Verschleiß treten zunächst zwei weitere Quadrate an der Lauffläche auf. Bei weiter fortschreitendem Verschleiß schließen sich nacheinander auch die Lücken zwischen den Quadraten. Diese Struktur kann in geringen Abständen über den gesamten Umfang des Kolbenrings angebracht werden, was bei Zweitaktmotoren vorteilhaft ist. Bei Viertaktmotoren kann es ausreichend sein, diese Struktur nur am Ringrücken und/oder am Ringstoß anzubringen, je nach dem an welcher Stelle der Größte Verschleiß zu erwarten ist.

Die Struktur 14/4 in Figur 4B stellt eine schräge Struktur dar, die aus dem Material des Kolbenringkörpers 4 gearbeitet ist. Die Struktur 14/4 weist zwei abgeschrägte Elemente auf, woraus sich ein lineares Höhen/Breiten- bzw. Höhen/Abstands-Verhältnis ergibt. Somit kann der Fachmann aus der Gesamtbreite und dem Abstand der an der Oberfläche Lauffläche 16 in Erscheinung tretenden Strukturen eine mögliche Restdicke der Verschleißschutzschicht 12 ablesen. Bei der Hälfte der Dicke D der Verschleißschutzschicht 12 erscheinen zunächst zwei schmale Rechtecke der Breite B. Bei weiter fortschreitendem Verschleiß treten verlängern sich die beiden Rechtecke, wobei der Abstand zwischen den Rechtecken abnimmt. Bei weiter fortschreitendem Verschleiß verringert sich der Abstand immer weiter, bis die beiden Rechtecke zu einem einzigen verschmelzen. Aus dem Verhältnis der Gesamtlänge L der Struktur zu dem Abstand zwischen den Rechtecken kann der Fachmann die verbleibende Restdicke der Verschleißschutzschicht 12 ablesen. Auch die Struktur 12/4 kann in geringen Abständen über den gesamten Umfang des Kolbenrings angebracht werden, was für Zweitaktmotoren vorteilhaft ist. Bei Viertaktmotoren kann es ausreichend sein, diese Struktur nur am Ringrücken oder am Ringstoß anzubringen, da bei diesem Motorentyp der Kolben zur Begutachtung der Kolbenringe aus dem Zylinder genommen werden muss.

Es sollte klar sein, dass die Strukturen 44/14 oder 14/4 auch in Umfangsrichtung auf die Außenseite des Kolbenringkörpers aufgebracht werden können.

Die Erfindung bezieht sich auf beschichtete Ringe, insbesondere, wenn die Lauffläche nach der Beschichtung noch nachbearbeitet wird. Bei der Ringherstellung wird auf das Laufflächenprofil vor der Beschichtung beispielsweise ein Verschleißanzeigekeil oder eine andere vorstehende Struktur am Scheitelpunkt angebracht. Im Motorbetrieb verschleißt die Laufflächenbeschichtung, bis der Verschleißanzeigekeil oder die andere Struktur freigelegt wird. Bei einer Inspektion kann der Anwender das Vorhandensein des Verschleißanzeigekeils oder der anderen Struktur leicht erkennen und so auf die Restschichtdicke des Ringes schließen. Das Freilegen des Verschleißanzeigekeils ist für den Motorlauf wesentlich unproblematischer als das vollständige verschleißen der Laufflächenbeschichtung. Die Erfindung ist überall dort anwendbar, wo regelmäßig ein Ringverschleiß überprüft wird. Auch wenn die Erfindung sich insbesondere auf 2-Takt-Industriemotoren bezieht, ist es ebenfalls bei 4-Taktmotoren oder Kompressoren anwendbar.

Der Anwender kann rechtzeitig vor dem endgültigen Verschleiß der Laufflächenbeschichtung die Restlaufzeit des Ringes erkennen und so kritische Motorzustände vollständig vermeiden.

Die Voraussetzungen für eine auf den tatsächlichen Verschleiß bezogene Instandhaltung des Motors (in Bezug auf die Kolbenringe) wird durch den Verschleißanzeige erst ermöglicht oder zumindest wesentlich vereinfacht.

Die Zeichnung stellt lediglich beispielhafte Ausführungsformen dar. Um die Anmeldung nicht unnötig lang auszuführen, wurde auf viele verschiedene Darstellungen von Ausführungsformen verzichtet. Es sollte jedoch klar sein, dass auch verschiedene Kombinationen von Merkmalen, die sich aus Kombination der Merkmale der in den Figuren dargestellten Ausführungsformen der Erfindung ergeben, ebenfalls als offenbart angesehen werden sollen. So soll es auch im Rahmen dieser Beschreibung beispielsweise als offenbart angesehen werden unterschiedliche vorstehende Strukturen mit unterschiedlichen Materialien zu kombinieren. Es soll es auch im als offenbart angesehen werden, unterschiedliche vorstehende Strukturen in unterschiedlichen Richtungen anzuordnen

### Bezugszeichenliste

- 2: Kolbenring
- 4: Kolbenringkörper
- 6: Außenfläche
- 8: obere Ringflanke
- 10: untere Ringflanke
- 12: Verschleißschutzschicht
- 14: vorstehende Struktur
- 16: Lauffläche
- 42: Verschleißanzeige
- 44: Material der vorstehenden Struktur 14
- 46: Kammerung mit Verschleißanzeige 42
- h: Höhe der vorstehenden Struktur 14
- D: Dicke der Verschleißschutzschicht 12
- B: Breite der vorstehenden Struktur 14
- L: Länge der vorstehenden Struktur 14
- S-S: Schnittlinie

## Patentansprüche

1. Kolbenring (2) mit Verschleißanzeige (42), umfassend
einen Kolbenringkörper (4) mit einer Außenfläche (6), wobei die Außenfläche (6) des Kolbenringkörpers (4) mit einer nach außen um eine Höhe (h) vorstehenden Struktur (14) versehen ist,
wobei auf der Außenfläche (6) eine Verschleißschutzschicht (12) aufgebracht ist, die die vorstehende Struktur (14) überdeckt, **dadurch gekennzeichnet dass**, die Verschleißschutzschicht (12) eine Dicke (D) aufweist, die in dem Bereich der vorstehenden Struktur (14) um die Höhe (h) der vorstehenden Struktur verringert ist,
wobei sich die vorstehende Struktur (14) von der Außenfläche (6) nach außen verjüngt.

2. Kolbenring (2) gemäß Anspruch 1, wobei die nach außen um eine Höhe (h) vorstehende Struktur (14) ein anderes Material (44) umfasst als das Material, aus dem der Kolbenringkörper (4) gefertigt ist.

3. Kolbenring (2) gemäß Anspruch 1 oder 2, wobei die nach außen um eine Höhe (h) vorstehende Struktur (14) ein Material umfasst, deren mechanische Eigenschaften denen der Verschleißschutzschicht (12) entsprechen.

4. Kolbenring (2) gemäß Anspruch 3, wobei das Material der vorstehenden Struktur (14) eine andere Farbe aufweist als das Material der Verschleißschutzschicht (12).

5. Kolbenring gemäß einem der vorstehenden Ansprüche, wobei eine Lauffläche (16) der Verschleißschutzschicht (12) im Wesentlichen glatter als die Höhe (h) der vorstehenden Struktur (14) ausgeführt ist.

6. Kolbenring (2), gemäß einem der vorstehenden Ansprüche, wobei die Höhe (h) kleiner als 1/5, bevorzugt kleiner als 1/8 und weiter bevorzugt kleiner als 1/10 der Dicke (D) ist.

7. Kolbenring (2), gemäß einem der vorstehenden Ansprüche, wobei eine Breite (B) der vorstehenden Struktur 10 Mal, bevorzugt 50 Mal und weiter bevorzugt 70 Mal breiter ist als die Höhe (h).

8. Kolbenring (2), gemäß einem der vorstehenden Ansprüche, wobei die vorstehende Struktur (14) aus dem Material des Kolbenringkörpers (4) besteht..

9. Kolbenring (2), gemäß einem der vorstehenden Ansprüche, wobei die Höhe (h) zwischen 0,01mm und 0,1mm, bevorzugt zwischen 0,02mm und 0,06mm und weiter bevorzugt zwischen 0,03mm und 0,04mm beträgt.

10. Kolbenring (2), gemäß einem der vorstehenden Ansprüche, wobei eine Breite (B) zwischen 0,1 mm und 5mm, bevorzugt zwischen 0,5mm und 3mm und weiter bevorzugt zwischen 1mm und 2mm beträgt.

11. Kolbenring (2), gemäß einem der vorstehenden Ansprüche, wobei eine Dicke (D) zwischen 0,1mm und 1mm, bevorzugt zwischen 0,2mm und 0,6mm und weiter bevorzugt zwischen 0,3 und 0,4mm beträgt.

12. Kolbenring gemäß einem der vorstehenden Ansprüche, wobei die vorstehende Struktur (14) gestuft ist.

13. Kolbenring gemäß einem der vorstehenden Ansprüche, wobei die vorstehende Struktur (14) Morsezeichen oder eine Schrift bildet.

14. Kolbenring gemäß einem der vorstehenden Ansprüche, wobei die Verschleißschutzschicht (12) einseitig oder zweiseitig mit einer Kammerung (46) gekammert und wobei die vorstehende Struktur (14) an einer Grenze der Kammerung (46) angeordnet ist.

15. Herstellungsverfahren für einen Kolbenring (2) mit Verschleißanzeige (42), umfassend
Versehen eines Kolbenringkörpers (4), an einer Außenfläche (6) des Kolbenringkörpers (4) mit einer nach außen um eine Höhe (h) vorstehenden Struktur (14),
Aufbringen einer Verschleißschutzschicht (12) auf die Außenfläche (6), wobei die vorstehende Struktur (14) überdeckt wird,
Glätten der Verschleißschutzschicht (12) in dem Bereich, in dem die Verschleißschutzschicht (12) die vorstehende Struktur (14) überdeckt, sodass die Verschleißschutzschicht (12) eine Dicke (D) aufweist, die in dem Bereich der vorstehenden Struktur (14) um die Höhe (h) der vorstehenden Struktur verringert ist.

## Claims

1. A piston ring (2) with a wear indicator (42), comprising
a piston ring body (4) with an outer surface (6), wherein the outer surface (6) of the piston ring body (4) is provided with a structure (14) projecting outwards by a height (h),
an anti-wear layer (12) being applied on the outer surface (6), which covers the projecting structure (14),
**characterized in that**
the anti-wear layer (12) has a thickness (D), which is reduced by the height (h) of the projecting structure in the region of the projecting structure (14),
wherein the projecting structure (14) tapers outwards from the outer surface (6).

2. The piston ring (2) according to claim 1, wherein the structure (14) projecting outwards by a height (h) comprises a different material (44) than the material, from which the piston ring body (4) is manufactured.

3. The piston ring (2) according to claim 1 or 2, wherein the structure (14) projecting by a height (h) comprises a material, the mechanical properties of which correspond to those of the anti-wear layer (12).

4. The piston ring (2) according to claim 3, wherein the material of the projecting structure (14) has a different colour than the material of the anti-wear layer (12).

5. The piston ring according to one of the preceding claims, wherein a running surface (16) of the anti-wear layer (12) is realized to be substantially smoother than the height (h) of the projecting structure (14).

6. The piston ring (2) according to one of the preceding claims, wherein the height (h) is smaller than 1/5, preferably smaller than 1/8 and further preferably smaller than 1/10 of the thickness (D).

7. The piston ring (2) according to one of the preceding claims, wherein a width (B) of the projecting structure is 10-times, preferably 50-times and further preferably 70-times wider than the height (h).

8. The piston ring (2) according to one of the preceding claims, wherein the projecting structure (14) consists of the material of the piston ring body (4).

9. The piston ring (2), according to one of the preceding claims, wherein the height (h) is between 0.01 mm and 0.1 mm, preferably between 0.02 mm and 0.06 mm and further preferably between 0.03 mm and 0.04 mm.

10. The piston ring (2) according to one of the preceding claims, wherein a width (B) is between 0.1 mm and 5 mm, preferably between 0.5 mm and 3 mm and further preferably between 1 mm and 2 mm.

11. The piston ring (2) according to one of the preceding claims, wherein a thickness (D) is between 0.1 mm and 1 mm, preferably between 0.2 mm and 0.6 mm and further preferably between 0.3 and 0.4 mm.

12. The piston ring according to one of the preceding claims, wherein the projecting structure (14) is stepped.

13. The piston ring according to one of the preceding claims, wherein the projecting structure (14) forms Morse code or script.

14. The piston ring according to one of the preceding claims, wherein the anti-wear layer (12) is chambered on one side or on two sides with a chamber (46) and wherein the projecting structure (14) is arranged at a boundary of the chamber (46).

15. A production method for a piston ring (2) with a wear indicator (42), comprising
providing a piston ring body (4) on an outer surface (6) of the piston ring body (4) with a structure (14) projecting outwards by a height (h),
applying an anti-wear layer (12) onto the outer surface (6), wherein the projecting structure (14) is covered,
smoothing the anti-wear layer (12) in the region, in which the anti-wear layer (12) covers the projecting structure (14), so that the anti-wear layer (12) has a thickness (D), which is reduced in the region of the projecting structure (14) by the height (h) of the projecting structure.

## Revendications

1. Segment de piston (2) doté d'un indicateur d'usure (42), comprenant
un corps de segment de piston (4) avec une surface extérieure (6), dans lequel la surface extérieure (6) du corps de segment de piston (4) est pourvue d'une structure (14) dépassant en saillie vers l'extérieur d'une hauteur (h),
dans lequel sur la surface extérieure (6) est appliquée une couche de protection contre l'usure (12), qui recouvre la structure dépassant en saillie (14),
**caractérisé en ce que**
la couche de protection contre l'usure (12) présente une épaisseur (D), qui est diminuée dans la zone de la structure dépassant en saillie (14) de la hauteur (h) de la structure dépassant en saillie,
dans lequel la structure dépassant en saillie (14) va en s'amincissant vers l'extérieur à partir de la surface extérieure (6).

2. Segment de piston (2) selon la revendication 1, dans lequel la structure (14) dépassant en saillie vers l'extérieur d'une hauteur (h) comprend un autre matériau (44) que le matériau, dans lequel est fabriqué le corps de segment de piston (4).

3. Segment de piston (2) selon la revendication 1 ou 2, dans lequel la structure (14) dépassant en saillie vers l'extérieur d'une hauteur (h) comprend un matériau, dont les propriétés mécaniques correspondent à celles de la couche de protection contre l'usure (12).

4. Segment de piston (2) selon la revendication 3, dans lequel le matériau de la structure dépassant en saillie (14) présente une autre couleur que le matériau de la couche de protection contre l'usure (12).

5. Segment de piston selon une des revendications précédentes, dans lequel une surface de roulement (16) de la structure de protection contre l'usure (12) est conçue de manière essentiellement plus lisse que la hauteur (h) de la structure dépassant en saillie (14).

6. Segment de piston (2) selon une des revendications précédentes, dans lequel la hauteur (h) est plus petite que 1/5, de préférence plus petite que 1/8 et de manière encore préférée plus petite que 1/10 de la largeur (D).

7. Segment de piston (2) selon une des revendications précédentes, dans lequel une largeur (B) de la structure dépassant en saillie est 10 fois plus large, de préférence 50 fois plus large et de manière encore préférée 70 fois plus large que la hauteur (h).

8. Segment de piston (2) selon une des revendications précédentes, dans lequel la structure dépassant en saillie (14) est constituée du matériau du corps de segment de piston (4).

9. Segment de piston (2) selon une des revendications précédentes, dans lequel la hauteur (h) est comprise entre 0,01 mm et 0,1 mm, de préférence entre 0,02 mm et 0,06 mm et de manière encore préférée entre 0,03 mm et 0,04 mm.

10. Segment de piston (2) selon une des revendications précédentes, dans lequel une largeur (B) est compris entre 0,1 mm et 5 mm, de préférence entre 0,5 mm et 3 mm et de manière encore préférée entre 1 mm et 2 mm.

11. Segment de piston (2) selon une des revendications précédentes, dans lequel une largeur (D) est comprise entre 0,1 mm et 1 mm, de préférence entre 0,2 mm et 0,6 mm et de manière encore préférée entre 0,3 et 0,4 mm.

12. Segment de piston selon une des revendications précédentes, dans lequel la structure dépassant en saillie (14) est étagée.

13. Segment de piston selon une des revendications précédentes, dans lequel la structure dépassant en saillie (14) forme des signaux morse ou un texte écrit.

14. Segment de piston selon une des revendications précédentes, dans lequel la structure de protection contre l'usure (12) est confinée d'un côté ou des deux côtés avec un confinement (46) et dans lequel la structure dépassant en saillie (14) est disposée sur une limite du confinement (46).

15. Procédé de fabrication d'un segment de piston (2) doté d'un indicateur d'usure (42) comprenant de
prévoir un corps de segment de piston (4), sur une surface extérieure (6) du corps de segment de piston (4) avec une structure (14) dépassant en saillie vers l'extérieur d'une hauteur (h),
appliquer une couche de protection contre l'usure (12) sur la surface extérieure (6), dans lequel la structure dépassant en saillie (14) est recouverte,
lisser la couche de protection contre l'usure (12) dans la zone, dans laquelle la couche de protection contre l'usure (12) recouvre la structure dépassant en saillie (14), de sorte que la couche de protection contre l'usure (12) présente une épaisseur (D), qui est diminuée dans la zone de la shructure dépassant en saillie (14) de la hauteur (h) de la structure dépassant en saillie.
